(19) Europäisches Patentamt

European Patent Office

Office européen des brevets

(11) EP 0 517 554 B1

## (12) FASCICULE DE BREVET EUROPEEN

(45) Date de publication et mention de la délivrance du brevet:
**23.07.1997 Bulletin 1997/30**

(51) Int. Cl.⁶: **C01F 17/00**

(21) Numéro de dépôt: **92401142.2**

(22) Date de dépôt: **22.04.1992**

(54) **Composition à base d'oxyde cérique, sa préparation et ses utilisations**

Zeroxyd enthaltende Zusammensetzung, ihre Herstellung und ihre Anwendungen

Cerium oxide containing composition, the preparation thereof and the uses thereof

(84) Etats contractants désignés:
**AT BE CH DE DK ES FR GB GR IT LI LU NL PT SE**

(30) Priorité: **05.06.1991 FR 9106785**

(43) Date de publication de la demande:
**09.12.1992 Bulletin 1992/50**

(73) Titulaire: **RHONE-POULENC CHIMIE
92408 Courbevoie Cédex (FR)**

(72) Inventeurs:
 • **Bonneau, Lionnel
 F-17540 Angliers (FR)**
 • **Pijolat, Michèle
 F-42350 La Talaudière (FR)**
 • **Prin, Marie
 F-38430 Moirans (FR)**

 • **Touret, Olivier
 F-93300 Aubervilliers (FR)**

(74) Mandataire: **Dubruc, Philippe et al
RHONE-POULENC CHIMIE,
Direction de la Propriété Industrielle,
25, Quai Paul Doumer
92408 Courbevoie Cédex (FR)**

(56) Documents cités:
 **EP-A- 0 207 857          EP-A- 0 272 979
 EP-A- 0 388 567          EP-A- 0 396 159**

 • **CHEMICAL ABSTRACTS, vol. 110, no. 26, 26 juin 1989, Columbus, OH (US); K. OTSUKA et al., no. 233556r, pages 43-50, Columbus, Ohio, US; K. OTSUKA et al." Cerium oxide bades catalysts active for oxidative coupling of melhane"**

## Description

La présente invention est relative à une composition à base d'oxyde cérique à surface spécifique thermiquement stable et à un procédé de stabilisation thermique d'un oxyde cérique et ses applications tout particulièrement dans le domaine de la catalyse.

Dans l'exposé qui suit de l'invention, on entend par surface spécifique, la surface spécifique B.E.T déterminée selon la méthode BRUNAUER - EMMETT - TELLER décrite dans le périodique " The Journal of American Society 1938, 60, 309".

Il est connu que l'oxyde cérique peut être utilisé en tant que catalyseur ou support de catalyseur. On peut citer par exemple, les travaux de Paul MERIAUDEAU et Coll. relatifs à la synthèse du méthanol à partir de $CO + H_2$ sur des catalyseurs au platine déposé sur de l'oxyde cérique. (C.R. Acad. Sc. Paris t.297 - Série II-471 - 1983).

Il est également bien connu que l'efficacité d'un catalyseur est généralement d'autant plus grande que la surface du contact entre le catalyseur et les réactifs est grande. Pour ce faire, il est nécessaire que le catalyseur soit maintenu en un état le plus divisé possible, c'est-à-dire que les particules solides qui le composent soient aussi petites et individualisées que possible. Le rôle fondamental du support est donc de maintenir les particules de catalyseur ou cristallites au contact des réactifs, à l'état le plus divisé possible.

Lors de l'emploi prolongé d'un support de catalyseur, il se produit une diminution de la surface spécifique due d'une part à la coalescence des micropores très fins et d'autre part au grossissement des particules divisées par exemple par frittage. Au cours de cette diminution de surface, une partie du catalyseur est englobée dans la masse du support et ne peut plus être en contact avec les réactifs.

Jusqu'à présent, la plupart des oxydes cériques préparés présentent une surface spécifique qui décroit rapidement pour des températures de fonctionnement supérieures à 500°C. Ainsi, R.ALVERO et coll. (J. Chem. Soc. Dalton Trans 1984, 87) ont obtenu à partir de nitrate cérique et d'ammonium, un oxyde cérique présentant après calcination à une température de 600°C, une surface spécifique de 29 $m^2$/g.

Les auteurs précités P. MERIAUDEAU et coll ont déterminé sur le même type de préparation une surface spécifique de 27 $m^2$/g.

La présente invention se propose de fournir une composition à base d' oxyde cérique permettant la stabilisation thermique de sa surface spécifique caractérisé par le fait qu'elle contient de l'oxyde cérique et au moins un oxyde d'un autre élément métallique A choisi dans le groupe constitué par le magnésium, le scandium, le bore, le gallium ou un de leurs mélanges.

L'oxyde de l'autre élément métallique A peut être combiné ou non avec l'oxyde cérique, ou former une solution solide ou non.

L'oxyde cérique mis en oeuvre dans l'invention est un produit connu et décrit dans la littérature et dans de nombreux brevets ou demandes de brevet.

Il peut être préparé notamment par chauffage à l'air entre 400°C et 1000° de l'hydroxyde cérique ou de certains sels oxygénés tels que nitrates, sulfates, carbonates, oxalates, acétates, (Cf. Paul PASCAL - Nouveau Traité de Chimie Minérale. Tome VII p 777 - 1959 -) ou hydroxydes cériques sous forme de précipité ou de suspension colloïdale.

L'oxyde cérique mis en oeuvre présente une surface spécifique d'au moins 10 $m^2$/g de préférence, supérieure à 80 $m^2$/g et avantageusement comprise entre 80 et 300 $m^2$/g.

A titre d'exemples de matière première, on peut citer l'oxyde cérique décrit dans la demande de brevet n° 2559754 qui présente une surface spécifique pouvant atteindre 180 à 300 $m^2$/g mesurée après calcination à une température comprise entre 400 et 450°C ; ledit oxyde étant préparé comme décrit ultérieurement par calcination d'une dispersion colloïdale aqueuse d'un composé de cérium IV qui a été auparavant déstabilisé par addition d'une base.

Il peut être avantageux dans certaines applications de le mettre en forme en effectuant une agglomération de ces particules selon des techniques bien connues d' extrusion ou de pastillage par pression.

La composition de l'invention contient, outre l'oxyde cérique, un oxyde du ou des métaux A précités en une quantité représentant de 1 à 20 % atomique d'atome de métal A par rapport aux atomes de cérium, choisie avantageusement entre 1 et 10 %, et encore plus avantageusement entre 1 et 5 %. De préférence, elle peut être préparée par un procédé qui consiste à mélanger l'oxyde cérique avec au moins un oxyde des autres métaux précités.

Ce mélange peut être effectué par imprégnation de l'oxyde cérique à l'aide d'une solution d'au moins un sel des métaux A précités décomposable thermiquement en oxyde que l'on dénommera, de manière simplifiée, précurseur d'oxyde.

Au titre de précurseurs d'oxydes de ces métaux A, on peut citer les nitrates, les sulfates, acétates, oxydes hydratés par exemple.

Selon une variante préférée de l'invention, l'imprégnation est réalisée "à sec" c'est-à-dire que le volume total de solution utilisée est approximativement égal au volume poreux total présenté par l'oxyde cérique. Pour la détermination du volume poreux, il peut être réalisé selon la méthode connue au porosimètre à mercure ou bien par mesure de la quantité d'eau absorbée par un échantillon.

Il est également possible d'imprégner le support par trempage de celui-ci dans la solution du précurseur d'oxyde de l'élément A et d'éliminer l'excès de solution par égouttage.

La concentration de la solution du précurseur d'oxyde dépend de la solubilité dudit précurseur.

Selon une deuxième étape du procédé de l'invention, on sèche l'oxyde cérique imprégné pour éliminer l'eau, en laissant ainsi les précurseurs des oxydes désirés sous forme dispersée dans l'oxyde cérique.

Le séchage est effectué le plus souvent à l'air à une température qui peut varier entre 80°C et 300°C et choisie de préférence entre 100°C et 150°C. Le séchage est poursuivi jusqu'à obtention d'un poids constant.

Généralement, la durée du séchage est comprise entre 1 et 24 heures.

Selon la troisième étape du procédé de l'invention, on calcine l'oxyde cérique imprégné à une température comprise généralement entre 400 et 1200°C et de préférence entre 600 et 1000°C. La durée de calcination doit être suffisante pour transformer les précurseurs, en oxydes, et elle est fonction de la température d'utilisation de l'oxyde cérique.

La durée de calcination peut varier dans de larges limites entre 1 et 24 heures et est choisie de préférence entre 4 et 10 heures.

La composition de l'invention peut être préparée par d'autres procédés consistant à mélanger un précurseur de l'oxyde cérique avec un précurseur de l'autre élément métallique A, ce mélange pouvant être réalisé à toute les étapes de l'élaboration de l'oxyde cérique ou de son précurseur.

Ainsi, le moment de réaliser le mélange de l'élément métallique ou de son précurseur avec l'oxyde cérique ou son précurseur dépend de la nature de cet élément ou de son précurseur et des conditions de fabrication de l'oxyde cérique.

A titre d'exemple, on peut citer un mode de préparation de l'invention consistant à introduire l'élément métallique sous la forme de son précurseur dans une dispersion colloïdale aqueuse d'un composé de cérium IV.

Cette variante d'exécution consiste à préparer la composition de l'invention selon un procédé qui consiste :

- dans une première étape, à introduire au moins un précurseur d'oxyde d'un élément métallique A dans une dispersion colloïdale aqueuse d'un composé de cérium IV ,
- dans une deuxième étape, à déstabiliser ladite dispersion par addition d'une base,
- dans une troisième étape, à séparer le précipité obtenu,
- dans une quatrième étape, à le soumettre à un traitement thermique.

Dans la première étape du procédé de l'invention on peut faire appel à toute dispersion colloïdale aqueuse d'un composé de cérium IV et plus particulièrement à celles qui sont décrites dans la demande de brevet français 2596381 qui permettent d'obtenir ensuite des oxydes cériques à grande surface spécifique.

Les dispersions colloïdales aqueuses d'un composé de cérium IV décrites dans la demande de brevet français 2596381 sont obtenues par mise en dispersion dans l'eau d'un composé de cérium IV de formule générale (I) :

$$Ce\,(M)_x\,(OH)_y\,(NO_3)_z\,,\,n\,H_2O \qquad\qquad (I)$$

dans laquelle :

- M représente un métal alcalin ou un radical ammonium quaternaire
- $x$ est compris entre 0 et 0,2
- $z$ est compris entre O et 0,7
- $y$ est tel que $y = 4 - z + x$
- $n$ est compris entre 0 et environ 20.

On dénomme de manière simplifiée, par le terme "sol", la dispersion colloïdale aqueuse du composé de cérium IV répondant à la formule (I).

La concentration du composé de cérium IV dans le sol n'est pas critique. Lorsqu'elle est exprimée en $CeO_2$, elle se situe entre 0,1 et 2,0 moles/litre et, de préférence, entre 0,5 et 1 mole/litre.

Le taux de cérium IV sous forme colloïdale est supérieur à 95 % mais l'invention n'exclut pas le sol dans lequel il y aurait présence de cérium IV sous forme ionique. On choisit de préférence un taux de cérium compris entre 99 et 100 %.

La taille des colloïdes présents dans le sol peut varier dans une gage assez large. Généralement, le diamètre hydrodynamique moyen des colloïdes déterminé par diffusion quasi-élastique de la lumière selon la méthode décrite par Michael L. Mc Connell dans Analytical Chemistry 53, n° 8 1007 A (1981), peut varier entre 30 et 2000 Å.

Ledit composé de cérium IV est préparé selon un procédé qui consiste dans une première étape, à hydrolyser une solution aqueuse d'un sel de cérium IV en milieu acide, dans une deuxième étape, à séparer le précipité obtenu et dans une troisième étape, qui n'est pas obligatoire, à le traiter thermiquement.

A titre de solution aqueuse d'un sel de cérium IV, on peut faire appel à une solution de nitrate cérique obtenue par action de l'acide nitrique sur un oxyde cérique hydraté préparé d'une manière classique, par réaction d'une solution d'un sel céreux par exemple, le carbonate céreux et d'une solution d'ammoniaque en présence d'eau oxygénée.

La solution de nitrate cérique obtenue selon le procédé d'oxydation électrolytique d'une solution de nitrate céreux et qui est décrite dans la demande de brevet français FR-A 2 570 087 constitue une matière première de choix.

Le composé de cérium IV dispersable dans l'eau peut également être obtenu par désagglomération d'un oxyde cérique en milieu acide, notamment acide nitrique tel que décrit dans les brevets US 3645910, US 3761571, US 4231893, US 4356106, US 4576921, US 4606847.

Dans cette variante de procédé, les précurseurs d'oxydes métalliques sont utilisés sous forme de solution aqueuse ou sous forme solide.

La deuxième étape du procédé de l'invention consiste à effectuer la déstabilisation de la dispersion colloïdale aqueuse d'un composé de cérium IV contenant au moins un précurseur d'oxyde de l'élément A par addition d'une base dans ladite dispersion.

La solution basique mise en oeuvre selon le procédé de l'invention peut être notamment une solution aqueuse d'ammoniaque, de soude ou de potasse. On peut également faire appel à l'ammoniac gazeux. Selon l'invention, on met en oeuvre de préférence une solution d'ammoniaque.

La normalité de la solution basique mise en oeuvre n'est pas un facteur critique selon l'invention, elle peut varier dans de larges limites, par exemple, entre 0,1 et 11 N mais il est préférable de faire appel à des solutions dont la concentration varie entre 5 et 10 N.

La quantité de base additionnée est déterminée de telle sorte que le pH final de la dispersion traitée soit supérieur à 7 et de préférence supérieur ou égal à 9 et inférieur ou égal à 10.

La troisième étape du procédé consiste à séparer le précipité obtenu selon les techniques classiques de séparation solide-liquide: filtration, décantation, centrifugation ou essorage.

Cette séparation est effectuée généralement à température ambiante.

On peut éventuellement soumettre le précipité séparé à une opération de lavage.

Le lavage peut être opéré à l'eau ou à l'aide d'un solvant organique. On peut faire appel aux hydrocarbures aliphatiques, cycloaliphatiques ou aromatiques, à des cétones aliphatiques ou cycloaliphatiques ou à des alcools aliphatiques ou cycloaliphatiques tels que le méthanol, l'éthanol, le n-propanol, l'isopropanol, le n-butanol, l'isobutanol, le néobutanol.

Dans la quatrième étape du procédé de l'invention, on effectue le traitement thermique du produit obtenu après séparation et éventuellement lavage.

Le traitement thermique débute généralement par un séchage effectué à l'air ou sous pression réduite de l'ordre de 1 à 100 mm de mercure (133,3322 Pa et 13 332,2 Pa). La température de séchage peut varier entre la température ambiante et 100°C et la durée de séchage n'est pas critique et peut être comprise entre 2 et 48 heures et de préférence 10 à 24 heures.

Enfin, dans une dernière opération, on soumet le produit séché à une calcination à une température choisie entre 400°C et 1200°C mais de préférence, entre 600°C et 1000°C. Elle dure environ 1 heure à 24 heures et de préférence 4 à 10 heures.

La température de calcination est déterminée en fonction de la surface spécifique souhaitée pour l'application catalytique subséquente en tenant compte du fait que la surface spécifique est d'autant plus faible que la température de calcination est plus élevée.

Dans d'autres variantes du procédé, le précurseur d'oxyde métallique peut être ajouté pendant la fabrication du composé de cérium IV dispersable, c'est à dire pendant l'étape d'hydrolyse d'un composé de cérium IV.

Il peut également être ajouté et mélangé avec le composé récupéré après déstabilisation du sol, notamment quand ce composé est soumis à un traitement hydrothermal tel que décrit dans les brevets français 2617154, 2632945, 2640954 et européen n° 300852.

Les applications de la composition à base d'oxyde cérique selon l'invention sont très nombreuses. On peut citer notamment les applications en tant que charge, liant, washcoat, épaississant, dispersant, renforçateur, pigment, absorbant.

L'oxyde cérique stabilisé selon l'invention le rend bien adapté pour être utilisé dans le domaine de la catalyse, comme catalyseur ou comme support catalytique.

Il peut être employé comme catalyseur ou support de catalyseur pour effectuer diverses réactions telles que, par exemple : la déshydratation, l'hydrosulfuration, l'hydro-dénitrification, la désulfuration, l'hydrodésulfuration, la déshydrohalogénation, le reformage, le reformage à la vapeur, le craquage, l'hydrocraquage, l'hydrogénation, la déshydrogénation, l'isomérisation, la dismutation, l'oxychloration, la déshydrocyclisation d'hydrocarbures ou autres composés organiques, les réactions d'oxydation et/ou de réduction, la réaction de Claus, le traitement des gaz d'échappement des moteurs à combustion interne, la démétallation, la méthanation, la shift conversion.

Ainsi, une des applications les plus importantes est bien sur l'utilisation comme élément pour catalyseur pour le traitement des gaz d'échappement des moteurs à combustion interne. Ainsi, dans cette application, l'oxyde cérique stabilisé est mélangé à de l'alumine avant ou après imprégnation par des éléments catalytiquement actifs, tels que des métaux précieux.

Ce mélange est soit mis en forme pour former des catalyseurs, par exemple sous forme de bille, soit utilisé pour former un revêtement d'un corps refractaire tel qu'un monolithe en céramique ou métallique, ce revêtement est généralement connu sous le nom de "wash-coat".

Les exemples qui suivent illustrent l'invention sans toutefois la limiter. Dans les exemples, les éléments métalliques sont dosés par spectromètrie d'émission plasma.

Exemple 1 : Stabilisation par le bore

Un oxyde de cérium, obtenu par décomposition thermique d'un carbonate de cérium, présentant une surface spécifique de 115 m$^2$/g et un volume poreux de 0,21 cm$^3$/g - mesuré par imprégnation à l'eau - après calcination à 400°C pendant 6 heures, est imprégné par une solution aqueuse d'acide orthoborique contenant 46 g/l d'acide.

Cette imprégnation est réalisée par la méthode appelée "imprégnation à sec", c'est à dire que le volume de solution d'imprégnation est approximativement égal au volume poreux du solide à imprégner.

Le produit imprégné est séché à l'étuve sous air pendant 10 heures à 120°C puis calciné à 700°C pendant 6 heures.

On réalise également un essai témoin dans les mêmes conditions mais en remplaçant la solution d'acide orthoborique par de l'eau pure.

Les résultats obtenus sont rassemblés dans le tableau I ci-joint.

TABLEAU I

| Essai | Composition % atomique | Surface spécifique après calcination à 700°C | Taille de cristallite de $CeO_2$ |
|---|---|---|---|
| Témoin | $CeO_2$ | 16 m$^2$/g | 27 nm |
| Exemple 1 | $CeO_2 + B_2O_3$ B/Ce = 2,5 % | 25 m$^2$/g | 20,3 nm |

La taille de cristallite est mesurée par la largeur de raie à mi-hauteur de la raie 111 du spectre de diffraction X de l'oxyde de cérium $CeO_2$, en appliquant l'équation de Debye-Scherrer.

La surface spécifique est mesurée par la méthode B.E.T. décrite dans l'article de S. Brumauer, P.H. Emmett et E. Teller publié dans la revue J.A.C.S vol 60, Feb. 1938 pp. 309-319.

Exemple 2 : Stabilisation par le scandium

On réalise l'imprégnation d'un oxyde de cérium identique à celui de l'exemple 1 par une solution aqueuse de nitrate de scandium à 979 g/l de Sc $(NO_3)_3$, 4H$_2$O selon la méthode d'imprégnation décrite à l'exemple 1.

Le produit est ensuite séché sous air à 120°C pendant 10 heures puis calciné à 850°C pendant 5 heures.

Un essai témoin est réalisé dans les mêmes conditions mais avec de l'eau pure comme solution d'imprégnation.

Les résultats sont rassemblés dans le tableau II ci-dessous.

TABLEAU II

| Essai | Composition % atomique | Surface spécifique après calcination à 850°C | Taille de cristallite de $CeO_2$ |
|---|---|---|---|
| Témoin | $CeO_2$ | 5 m$^2$/g | 55,6 nm |
| Exemple 2 | $CeO_2 + Sc_2O_3$ Sc/Ce = 10 % | 19 m$^2$/g | 16,3 nm |

Exemple 3 : Stabilisation par le magnesium

Les exemples 1 et 2 sont répétés mais en utilisant une solution de nitrate de magnésium contenant 828 g/l de $Mg(NO_3)_2$, 6H$_2$O.

L'oxyde de cérium imprégné est sèché à l'étuve à 120°C pendant 10 heures puis calciné 5 heures à 850°C.

Un essai témoin est réalisé dans les mêmes conditions mais avec de l'eau pure.

Les résultats sont rassemblés dans le tableau III ci-dessous.

TABLEAU III

| Essai | Composition % atomique | Surface spécifique après calcination à 850°C | Taille de cristallite de $CeO_2$ |
|---|---|---|---|
| Exemple 3 | $CeO_2$ - $MgO_2$ Mg/Ce = 10 % | 11 $m^2$/g | 29,3 nm |
| Témoin | $CeO_2$ | 5 $m^2$/g | 55,6 nm |

Exemple 4 : Stabilisation par le gallium

Un oxyde de cérium obtenu selon le procédé décrit dans la demande de brevet français n° 2617154, présentant une surface spécifique de 240 $m^2$/g et un volume poreux de 0,50 $cm^3$/g après calcination à 400°C pendant 6 heures, est imprégné par une solution aqueuse de nitrate de gallium (120 g/l de $Ga(NO_3)_3$, $8H_2O$) selon la technique décrite à l'exemple 1.

Le produit est ensuite sèché à l'étuve sous air à 120°C puis calciné 6 heures à 1000°C dans l'air.

Un essai témoin est réalisé selon le même procédé mais avec comme solution d'imprégnation de l'eau pure.

Les résultats sont rassemblés dans le tableau IV ci-dessous.

TABLEAU IV

| Essai | Composition % atomique | Surface spécifique après calcination à 1000°C | Taille de cristallite de $CeO_2$ |
|---|---|---|---|
| Témoin | $CeO_2$ | 16 $m^2$/g | > 50 nm |
| Exemple 4 | $CeO_2$ $Ga_2O_3$ Ga/Ce = 2,5% | 20 m2/g | 34,9 nm |

Exemple 5 : Stabilisation par le bore

Un oxyde de cérium est préparé selon le procédé décrit dans la demande de brevet français n° 2640954.

Ce procédé consiste brièvement à hydrolyser un sel de Cérium IV (solution de nitrate de cérium produits par oxydation électrochimique d'une solution de nitrate céreux), puis à déstabiliser la suspension obtenue par addition d'ammoniaque. Le composé ainsi obtenue est filtré puis placé dans un autoclave en milieu aqueux.

Ce milieu aqueux contient une quantité déterminée d'acide borique pour obtenir un rapport atomique B/Ce égal à 2,5 %.

Le mélange est maintenu à 200°C sous $16 \times 10^5$ Pa pendant une heure.

Le produit récupéré est sèché à l'étuve pendant 10 heures à une température de 120°C puis calciné 2 heures à 800°C.

Un essai témoin est réalisé, sans ajout d'acide borique dans le milieu d'autoclave.

Les résultats obtenus sont rassemblés dans le tableau 5 ci-dessous.

TABLEAU V

| Essai | Composition % atomique | Surface spécifique après calcination à 800°C | Taille de cristallite de $CeO_2$ |
|---|---|---|---|
| Témoin | $CeO_2$ | 60 $m^2$/g | 5,6 nm |
| Exemple 5 | $CeO_2$, $B_2O_3$ B/Ce = 2,5 % | 70 m2/g | 5,1 nm |

EP 0 517 554 B1

Exemple 6 : Stabilisation avec le Gallium

L'exemple 5 est répété, en substituant à l'acide borique du nitrate de gallium, et avec une température de calcination de 1000°C.

Les résultats obtenus sont rassemblés dans le tableau VI ci-dessous.

TABLEAU VI

| Essai | Composition % atomique | Surface spécifique après calcination à 800°C | Taille de cristallite de $CeO_2$ |
|---|---|---|---|
| Témoin | $CeO_2$ | 19 $m^2$/g | 50 nm |
| Exemple 6 | $CeO_2$ $Ga_2O_3$ Ga/Ce =2,5 % | 22 $m2_{/g}$ | 34,6 nm |

## Revendications

1. Composition à base d'oxyde cérique à surface spécifique supérieure à 10 $m^2$/g après calcination à 800°C, caractérisée par le fait qu'elle contient de l'oxyde cérique et au moins un oxyde d'un autre élément métallique A choisi dans le groupe constitué par le gallium, le scandium ou leur mélange.

2. Composition selon la revendication 1, caractérisé en ce que le rapport atomique métal par rapport au cérium est compris entre 1% et 20%.

3. Composition selon la revendication 2, caractérisée en ce que le rapport atomique métal/cérium est compris entre 1% et 10%, de préférence entre 1 et 5%.

4. Composition à base d'oxyde cérique à surface spécifique supérieure à 10 $m^2$/g après calcination à 800°C, caractérisée par le fait qu'elle contient de l'oxyde cérique et au moins un oxyde d'un autre élément métallique A choisi dans le groupe constitué par le magnésium, le bore ou leur' mélange, le rapport atomique métal/cérium étant compris entre 1 et 10%.

5. Composition selon la revendication 4, caractérisée en ce que le rapport atomique métal/cérium est compris entre 1 et 5%.

6. Procédé de fabrication d'une composition selon l'une des revendications précédentes, dans lequel on produit un oxyde de cérium par calcination à une température comprise entre 400 et 500°C, 500°C étant exclus, d'un composé de cérium thermiquement décomposable, caractérisé en ce qu'on imprègne l'oxyde de cérium ainsi produit avec une solution d'un composé de l'élément métallique A décomposable thermiquement, puis on calcine ledit oxyde de cérium imprégné après éventuellement un séchage.

7. Procédé selon la revendication 6, caractérisé en ce que le composé de cérium thermiquement décomposable est un sel de cérium, un composé hydraté de cérium, un hydrate de cérium.

8. Procédé de fabrication d'une composition selon l'une des revendications 1 à 5, caractérisé en ce qu'il consiste à produire un oxyde cérique selon un procédé comprenant les étapes :

   (i) hydrolyser un composé de cérium IV pour produire une dispersion colloïdale,
   (ii) destabiliser la dispersion colloïdale par addition d'un composé basique,
   (iii) séparer le précipité obtenu,
   (iv) reprendre le précipité par une solution aqueuse et le soumettre à un traitement hydrothermal en enceinte fermée, et
   (v) à calciner le précipité obtenu après séparation et séchage éventuel de celui-ci,

   et en ce que, un composé thermiquement décomposable de l'élément métallique A est ajouté dans une des étapes (i), (ii) et (iv) du procédé de séparation de l'oxyde cérique.

7

**9.** Procédé selon la revendication 8, caractérisé en ce que le composé de l'élément métallique A est ajouté à la solution aqueuse de l'étape (iv) avant le traitement hydrothermal.

**10.** Procédé selon l'une des revendications 6 à 8, caractérisé en ce que le composé de l'élément métallique A est un sel, un hydroxyde ou un oxyde hydraté dudit élément.

**11.** Catalyseur comprenant un support poreux et des éléments catalytiquement actifs, caractérisé en ce que le support poreux comprend de l'alumine en mélange avec une composition selon l'une des revendications 1 à 5.

**12.** Catalyseur de type monolithe comprenant une structure réfractaire revêtue par une couche poreuse sur laquelle sont déposés des éléments catalytiquement actifs métalliques, caractérisé en ce que ladite couche poreuse comprend une alumine en mélange, avec une composition à base d'oxyde cérique selon l'une des revendications 1 à 5.

**13.** Utilisation comme stabilisant de la surface spécifique dans une composition à base d'oxyde cérique présentant une surface spécifique supérieure à 10 $m^2/g$ après calcination à 800°C, d'un oxyde d'un élément métallique A choisi dans le groupe constitué par le magnésium, le gallium, le bore, le scandium ou leur mélange.

**14.** Utilisation selon la revendication 13, caractérisée en ce que le rapport atomique métal par rapport au cérium est compris entre 1% et 20%, plus particulièrement entre 1 et 10%.

**15.** Utilisation selon la revendication 14, caractérisée en ce que le rapport atomique précité est compris entre 1 et 5%.

**16.** Utilisation du catalyseur selon l'une des revendications 11 ou 12 ou de la composition à base d'oxyde cérique selon l'une des revendications 1 à 5 comme élément catalyseur pour le traitement des gaz d'échappement des moteurs à combustion interne.

**Claims**

**1.** Ceric oxide-based composition with a specific surface higher than 10 $m^2/g$ after calcination at 800°C, characterized in that it contains ceric oxide and at least one oxide of another metallic element A chosen from the group consisting of gallium, scandium or a mixture thereof.

**2.** Composition according to Claim 1, characterized in that the atomic ratio of metal in relation to cerium is between 1 % and 20 %.

**3.** Composition according to Claim 2, characterized in that the metal/cerium atomic ratio is between 1 % and 10 %, preferably between 1 and 5 %.

**4.** Ceric oxide-based composition with a specific surface higher than 10 $m^2/g$ after calcination at 800°C, characterized in that it contains ceric oxide and at least one oxide of another metallic element A chosen from the group consisting of magnesium, boron or a mixture thereof, the metal/cerium atomic ratio being between 1 and 10 %.

**5.** Composition according to Claim 4, characterized in that the metal/cerium atomic ratio is between 1 and 5 %.

**6.** Process for the manufacture of a composition according to one of the preceding claims, in which a cerium oxide is produced by calcination at a temperature of between 400 and 500°C, 500°C being excluded, of a thermally decomposable cerium compound, characterized in that the cerium oxide thus produced is impregnated with a solution of a thermally decomposable compound of the metallic element A, and the said impregnated cerium oxide is then calcined, optionally after a drying operation.

**7.** Process according to Claim 6, characterized in that the thermally decomposable cerium compound is a cerium salt, a hydrated cerium compound or a cerium hydrate.

**8.** Process for the manufacture of a composition according to one of Claims 1 to 5, characterized in that it consists in producing a ceric oxide according to a process comprising the stages:

(i) hydrolysing a cerium(IV) compound to produce a colloidal dispersion,
(ii) destabilizing the colloidal dispersion by addition of a basic compound,
(iii) separating off the precipitate obtained,

(iv) taking up the precipitate with an aqueous solution and subjecting it to a hydrothermal treatment in a closed vessel, and

(v) in calcining the precipitate obtained after separation and optional drying of the latter,

and in that a thermally decomposable compound of the metallic element A is added in one of the stages (i), (ii) and (iv) of the process for separation of ceric oxide.

9. Process according to Claim 8, characterized in that the compound of the metallic element A is added to the aqueous solution of stage (iv) before the hydrothermal treatment.

10. Process according to one of Claims 6 to 8, characterized in that the compound of the metallic element A is a salt, a hydroxide or an oxide hydrate of the said element.

11. Catalyst comprising a porous support and catalytically active elements, characterized in that the porous support comprises alumina mixed with a composition according to one of Claims 1 to 5.

12. Catalyst of monolithic type comprising a refractory structure coated with a porous layer onto which metallic catalytically active elements are deposited, characterized in that the said porous layer comprises an alumina as a mixture with a ceric oxide-based composition according to one of Claims 1 to 5.

13. Use as stabilizer of the specific surface, in a cerium oxide-based composition exhibiting a specific surface higher than 10 $m^2$/g after calcination at 800°C, of an oxide of a metallic element A chosen from the group consisting of magnesium, gallium, boron, scandium or a mixture thereof.

14. Use according to Claim 13, characterized in that the atomic ratio of metal in relation to cerium is between 1 % and 20 %, more particularly between 1 and 10 %.

15. Use according to Claim 14, characterized in that the abovementioned atomic ratio is between 1 and 5 %.

16. Use of the catalyst according to either of Claims 11 and 12 or of the ceric oxide-based composition according to Claims 1 to 5 as catalyst component for the treatment of exhaust gases from internal combustion engines.

**Patentansprüche**

1. Zusammensetzung auf Basis von Ceroxid mit einer spezifischen Oberfläche nach Calcinierung bei 800 °C von mehr als 10 $m^2$/g, dadurch gekennzeichnet, daß sie Ceroxid und mindestens ein Oxid eines weiteren Metallelementes A enthält, das ausgewählt ist aus der Gruppe von Gallium, Scandium oder deren Mischung.

2. Zusammensetzung nach Anspruch 1, dadurch gekennzeichnet, daß das Atomverhältnis von Metall zu Cer zwischen 1 % und 20 % liegt.

3. Zusammensetzung nach Anspruch 2, dadurch gekennzeichnet, daß das Atomverhältnis Metall/Cer zwischen 1 % und 10 %, vorzugsweise zwischen 1 % und 5 %, liegt.

4. Zusammensetzung auf Basis von Ceroxid mit einer spezifischen Oberfläche nach Calcinierung bei 800 °C von mehr als 10 $m^2$/g, dadurch gekennzeichnet, daß sie Ceroxid und mindestens ein Oxid eines weiteren Metallelementes A enthält, das ausgewählt ist aus der Gruppe von Magnesium, Bor oder deren Mischung, wobei das Atomverhältnis von Metall/Cer zwischen 1 % und 10 % liegt.

5. Zusammensetzung nach Anspruch 4, dadurch gekennzeichnet, daß das Atomverhältnis Metall/Cer zwischen 1 % und 5 % liegt.

6. Verfahren zur Herstellung einer Verbindung nach einem der vorhergehenden Ansprüche, bei dem man ein Ceroxid durch Calcinierung einer thermisch zersetzbaren Cerverbindung bei einer Temperatur zwischen 400 °C und 500 °C herstellt, wobei 500 °C ausgenommen sind, dadurch gekennzeichnet, daß man das so erhaltene Ceroxid mit einer Lösung einer thermisch zersetzbaren Verbindung des Metallelementes A tränkt (imprägniert) und dann das imprägnierte Ceroxid, gegebenenfalls nach einer Trocknung, calciniert.

7. Verfahren nach Anspruch 6, dadurch gekennzeichnet, daß die thermisch zersetzbare Cerverbindung ein Cersalz, eine wasserhaltige Cerverbindung oder ein Cerhydrat ist.

8. Verfahren zur Herstellung einer Verbindung nach einem der Ansprüche 1 bis 5, dadurch gekennzeichnet, daß man ein Ceroxid nach einem Verfahren mit den folgenden Verfahrensschritten herstellt:

> (i) Hydrolyse einer Cer(IV)-Verbindung zur Herstellung einer kolloidalen Dispersion;
> (ii) Destabilisierung der kolloidalen Dispersion durch Zugabe einer basischen Verbindung;
> (iii) Abtrennung des erhaltenen Niederschlages;
> (iv) Aufnahme des Niederschlags mit einer wäßrigen Lösung und hydrothermische Behandlung des Niederschlages in einem geschlossenen Behältnis;
> (v) Calcinierung des nach Abtrennung und gegebenenfalls nach Trocknung erhaltenen Niederschlags;

und daß eine thermisch zersetzbare Verbindung des Metallelementes A in einem der Verfahrensschritte (i), (ii) und (iv) des Verfahrens zur Abtrennung des Ceroxids hinzugegeben wird.

9. Verfahren nach Anspruch 8, dadurch gekennzeichnet, daß die Verbindung des Metallelementes A vor der hydrothermischen Behandlung zu der wäßrigen Lösung des Verfahrensschrittes (iv) hinzugegeben wird.

10. Verfahren nach einem der Ansprüche 6 bis 8, dadurch gekennzeichnet, daß die Verbindung des Metallelementes A ein Salz, ein Hydroxid oder ein wasserhaltiges Oxid dieses Elementes ist.

11. Katalysator, enthaltend einen porösen Träger und katalytisch aktive Bestandteile, dadurch gekennzeichnet, daß der poröse Träger Aluminiumoxid in Mischung mit einer Zusammensetzung nach einem der Ansprüche 1 bis 5 umfaßt.

12. Katalysator vom Monolithtyp, umfassend eine hitzebeständige Struktur, die mit einer porösen Schicht überzogen ist, auf der katalytisch aktive, metallische Bestandteile aufgebracht sind, dadurch gekennzeichnet, daß die poröse Schicht ein Aluminiumoxid in Mischung mit einer Zusammensetzung auf Basis von Ceroxid nach einem der Ansprüche 1 bis 5 umfaßt.

13. Verwendung eines Oxids eines Metallelementes A, das aus der Gruppe von Magnesium, Gallium, Bor, Scandium oder deren Mischung ausgewählt ist, als Stabilisierungsmittel für die spezifische Oberfläche in einer Zusammensetzung auf Basis von Ceroxid, die nach Calcinierung bei 800 °C eine spezifische Oberfläche von mehr als 10 m$^2$/g aufweist.

14. Verwendung nach Anspruch 13, dadurch gekennzeichnet, daß das Atomverhältnis von Metall zu Cer zwischen 1 % und 20 %, insbesondere zwischen 1 % und 10 %, liegt.

15. Verwendung nach Anspruch 14, dadurch gekennzeichnet, daß das zuvor genannte Atomverhältnis zwischen 1 % und 5 % liegt.

16. Verwendung des Katalysators nach Anspruch 11 oder 12 oder der Zusammensetzung auf Basis von Ceroxid nach einem der Ansprüche 1 bis 5 als Katalysatorbestandteil zur Behandlung von Abgasen aus Verbrennungsmotoren.